# EUROPÄISCHE PATENTSCHRIFT

(11) **EP 3 196 017 B1**
(45) Veröffentlichungstag und Bekanntmachung des Hinweises auf die Patenterteilung: **17.04.2019**
(21) Anmeldenummer: 16198404.2
(22) Anmeldetag: 11.11.2016
(51) Int. Cl.: B32B 37/10, B30B 15/06

(54) **LAMINIERVORRICHTUNG SOWIE VERFAHREN ZUM LAMINIEREN VON MEHREREN IN EINEM STAPEL ANGEORDNETEN SCHICHTEN**
LAMINATING DEVICE AND METHOD FOR LAMINATING A PLURALITY OF LAYERS ARRANGED IN A STACK
DISPOSITIF DE STRATIFICATION AINSI QUE PROCÉDÉ POUR STRATIFIER PLUSIEURS COUCHES EMPILÉES

(30) Priorität: 21.01.2016 DE 102016101038
(43) Veröffentlichungstag der Anmeldung: 26.07.2017
(73) Patentinhaber: Bundesdruckerei GmbH, 10969 Berlin (DE)
(72) Erfinder: Kulikovsky, Lazar, 14165 Berlin (DE); Dressel, Olaf, 14641 Wustermark (DE); Wilke, Andreas, 13509 Berlin (DE); Kulikovska, Olga, 14165 Berlin (DE)
(74) Vertreter: Mammel und Maser

(56) Entgegenhaltungen:
- EP-A1- 2 327 546
- WO-A1-2014/096924
- WO-A2-2009/114189
- DE-C1- 19 920 577

## Beschreibung

Die Erfindung betrifft eine Laminiervorrichtung sowie ein Verfahren zum Laminieren von mehreren in einem Stapel angeordneten Schichten zu einem Laminatverbund.

Aus der WO 2014/096924 A ist eine Laminiervorrichtung für Solarmodule offenbart. Diese Laminiervorrichtung umfasst eine geschlossene Vakuum- oder Prozesskammer. In dieser Prozesskammer ist eine obere Heizplatte und eine untere passive Platte oder Halteplatte vorgesehen. Die obere Heizplatte ist über Dichtungen mit dem Rahmen der Prozesskammer unter Bildung einer Druckkammer verbunden. Durch Beaufschlagung dieser Druckkammer kann die Heizplatte auf die feststehende Platte zubewegt werden. Dabei kann die Dichtung und/oder die Prozesskammer mit Druckluft beaufschlagt werden.

Aus der WO 2009/114189 A1 ist des Weiteren ein Verfahren zur Bildung von Solarmodulen bekannt. Diesbezüglich sind eine untere feststehende Platte und eine obere bewegbare Platte vorgesehen, über welche ein Vakuum auf die Solarzellen angelegt werden kann.

Zur Herstellung eines Laminatverbundes, wie beispielsweise bei einer Identifikationskarte, Scheckkarte oder einer Personalisierdatenseite für buchartige Dokumente, die aus mehreren übereinanderliegenden Schichten bestehen, die nach dem Laminieren fest miteinander verbunden sind, erfolgt durch eine Laminiervorrichtung einer Plattenlaminationsanlage, welche ein Oberwerkzeug und ein Unterwerkzeug umfasst. An diesem Oberwerkzeug und Unterwerkzeug sind sogenannte Laminierbleche befestigt. Ein solches Laminierblech ist beispielsweise aus der DE 10 2008 058 912 A1 bekannt. Zwischen dem Laminierblech und der Heizplatte vom Ober- und Unterwerkzeug wird gemäß Stand der Technik ein Presspolster, beispielsweise aus einem Filzmaterial aufgelegt, bevor ein aus mehreren Schichten bestehender Stapel auf das Laminierblech aufgelegt wird. Anschließend wird auf die Oberseite des Stapels ein weiteres Laminierblech aufgelegt. Zwischen dem Laminier-blech und dem Oberwerkzeug ist ein weiteres Presspolster vorgesehen. Dies ermöglicht ein Ausgleich von einem gekippten Stapel oder von lokalen Unebenheiten in dem Stapel. Zudem soll eine gleichmäßige Flächenpressung auf den Laminatverbund erzielt werden.

Eine solche Laminiervorrichtung weist den Nachteil auf, dass ein erhöhter Energiebedarf für den Laminiervorgang notwendig ist, um dieses Presspolster aufzuheizen und anschließend wieder abzukühlen.

Der Erfindung liegt die Aufgabe zugrunde, ein Verfahren zum Laminieren von mehreren in einem Stapel angeordneten Schichten vorzuschlagen, bei welchem schnelle Prozess- und Zykluszeiten ermöglicht werden. Des Weiteren liegt der Erfindung die Aufgabe zugrunde, eine Laminiervorrichtung zu schaffen, welche ein schnelles Aufheizen und Abkühlen zur Durchführung eines Laminiervorgangs ermöglicht..

Die der Erfindung zugrunde liegende Aufgabe wird durch ein Verfahren zum Laminieren von mehreren in einem Stapel angeordneten Schichten zu einem Laminatverbund gelöst, bei welchem auf dem unteren Laminierblech die zu einem Stapel angeordneten Schichten aufgelegt werden, das obere und untere Presswerkzeug jeweils auf das diesem zugeordneten Laminierblech zubewegt werden, das obere und untere Presswerkzeug mit Druck auf das jeweilige Laminierblech gepresst und mit jeweils einem dazwischen angeordneten Dichtelement eine Druckkammer gebildet wird, welche während des Laminationsvorgangs mit einem Fluid befüllt wird. Dieses Verfahren weist den Vorteil auf, dass in einfacher Weise zwischen dem Presswerkzeug und dem Laminierblech eine Druckkammer gebildet werden kann, welche nur zu Zykluszeiten aufgeheizt und gekühlt werden kann. Darüber hinaus wird durch eine solche Druckkammer eine homogene Druckverteilung auf das Laminationsblech erzielt, so dass auch eine mechanische Flexibilität erzielt werden kann.

Bevorzugt ist vorgesehen, dass der Druckkammer über zumindest ein an den Dichtungselement und/oder dem Presswerkzeug angeordneten Zulauf und/oder Ablauf das Fluid zugeführt und abgeführt wird. Dadurch kann das Laminierblech einfach ausgebildet sein, so dass dieses schnell durch einen Austausch an die Laminieraufgabe angepasst werden kann.

Des Weiteren ist bevorzugt vorgesehen, dass die Druckkammer durch ein mit dem Presswerkzeug und dem Dichtelement verbundene Fluidkreislauf mit Fluid versorgt wird. Dieser Fluidkreislauf ist bevorzugt geschlossen ausgebildet. Dies weist den Vorteil auf, dass beispielsweise nach dem Aufheizen abströmendes heißes Fluid wieder in einen Zuführzweig für das heiße Fluid zurückgeführt werden kann. Analoges gilt für das kühle Fluid. Dadurch kann die verbleibende Restwärme beim heißen Fluid bzw. die Restkälte beim kühlen Fluid wieder in den jeweiligen Kreislauf zurückgeführt werden, ohne dass ein Temperaturausgleich stattfindet, der bei einer Mischung der beiden Fluide gegeben wäre.

Des Weiteren ist bevorzugt vorgesehen, dass zum Laminieren die Druckkammer mit einem heißen Fluid befüllt wird. Durch den unmittelbaren Kontakt des heißen Fluids mit dem Laminierblech kann ein verbessertes Aufheizen des Laminationsblechs gegeben sein. Zusätzlich kann die Druckkammer noch mit ergänzenden Heizelementen aufgeheizt werden, die an dem Presswerkzeug angeordnet sind.

Nach dem Laminieren wird die Druckkammer entleert und mit einem kühlen Fluid befüllt. Dadurch kann ein schneller Wechsel in die Kühlphase möglich sein, da das heiße Fluid aus der Druckkammer abgeführt wird und nicht durch das kühle Medium zunächst abgekühlt werden muss.

Des Weiteren ist bevorzugt vorgesehen, dass das in die Druckkammer eingeleitete heiße oder kühle Fluid über zumindest einen Ablauf des Presswerkzeugs einem Niederdruckspeicher zugeführt wird. Dies ermöglicht eine schnelle und erste Zwischenspeicherung zum Abführen des jeweiligen Fluids aus der Druckkammer. Darauf folgend kann das jeweilige heiße oder kühle Fluid aus dem Niederdruckspeicher in den jeweiligen Zuführzweig für heißes oder kühles Fluid zugeführt werden.

Des Weiteren ist bevorzugt vorgesehen, dass das kühle Fluid über einen Zuführzweig zumindest einem Zulauf an einem Dichtelement zugeführt wird und der Zuführzweig mit dem Niederdruckspeicher in Verbindung steht, der mit einem Ablauf am Presswerkzeug verbunden ist und der Zuführzweig einen Hochdruckspeicher aufweist, der mit einem aus dem Niederdruckspeicher bereitgestellten und mit einem Kompressor komprimierten Fluid befüllt wird. Durch diesen Zuführzweig wird ermöglicht, dass für einen Arbeitszyklus ein heißes Fluid bevorratet und bereitgestellt ist, so dass eine schnelle Befüllung der Druckkammer vorgesehen ist.

Des Weiteren ist bevorzugt vorgesehen, dass der kühle Fluid über einen Zuführzweig zumindest einem Zulauf an dem Dichtelement zugeführt wird, der mit dem Niederdruckspeicher in Verbindung steht und mit einem Ablauf am Presswerkzeug verbunden ist und der Zuführzweig einen Hochdruckspeicher aufweist, der mit einem aus dem Niederdruckspeicher bereitgestellten und mit einem Kompressor komprimierten Fluid befüllt wird. Die Bereitstellung eines Zuführzweiges für kühles Fluid hat dieselben Vorteile wie der für das heiße Fluid.

Die Druckkammer wird bevorzugt mit einem gasförmigen oder flüssigen Medium befüllt. Bevorzugt ist ein gasförmiges Medium, wie beispielsweise Luft vorgesehen, welches auch bei einem Entweichen in die Umgebung unkritisch ist.

Die der Erfindung zugrundeliegende Aufgabe wird durch eine Laminiervorrichtung zur Durchführung des Verfahrens gelöst, welche zwischen dem Presswerkzeug und dem jeweiligen Presswerkzeug zugeordneten Laminierblech ein Dichtungselement umfasst, welches nach dem Zusammenführen des Laminierblechs und des Presswerkzeuges eine befüllbare Druckkammer bildet. Diese Laminiervorrichtung weist den Vorteil auf, dass die Druckkammer vollständig mit einem Fluid befüllbar ist, wodurch ein Druckausgleich und ein schnelles Aufheizen und Abkühlen durch das Einbringen von heißen oder kühlen Fluids ermöglich ist. Darüber hinaus sind ein homogenes Aufheizen der zu laminierenden Schichten und ein darauffolgendes schnelles und gleichmäßiges Abkühlen ermöglicht. Zudem weist eine solche Anordnung den Vorteil auf, dass eine definierte Kontrolle des Flächendrucks auf das Laminierblech ermöglicht ist. Darüber hinaus können das Aufheizen der einzelnen Schichten zur Bildung des Laminatverbundes und das anschließende Abkühlen des Laminatverbundes in einem Arbeitsschritt oder Pressschritt erfolgen, wodurch die Transferzeit von einer Heizstation in eine Kühlstation entfällt.

Eine bevorzugte Ausgestaltung der Laminiervorrichtung sieht vor, dass das Presswerkzeug und/oder das Dichtelement zumindest einen Zulauf und zumindest einen Ablauf für das Fluid aufweisen. Dadurch kann in einfacher Weise eine Zuführung und Abführung des Fluids in und aus der Druckkammer ermöglicht sein.

Bevorzugt ist vorgesehen, dass der Zu- und Ablauf entfernt zueinander angeordnet sind. Dadurch kann eine gegenseitige Temperaturbeeinflussung verringert werden.

Bevorzugt ist vorgesehen, dass das Presswerkzeug ein oder mehrere zur Erstreckungsrichtung des Laminierblechs senkrecht ausgerichtete oder orientierte Zuläufe mit kleineren Durchmessern für das Fluid aufweist. Sofern mehrere Zuläufe vorgesehen sind, weisen diese vorteilhafterwiese Düsen auf. Damit wird den senkrechte Aufprall des Fluides an den Laminierblech mit der hohen Geschwindigkeit realisiert, wodurch die Wärmeübertragung vom Fluid zum Laminierblech erhöht wird.

Durch die Auswahl der Düsenanzahl, des Düsendurchmesser und Abstand zum Laminierblech werden die Aufheizgeschwindigkeit und die Homogenität des Aufheizens gesteuert.

Des Weiteren ist bevorzugt vorgesehen, dass das Presswerkzeug an einer zur Druckkammer weisenden oder die Druckkammer bildende Stirnfläche zumindest ein Temperatur- und/oder Drucksensor aufweist. Somit können in einfacher Weise unmittelbar die in der Druckkammer befindlichen Prozessparameter erfasst werden, um den Laminationsvorgang exakt anzusteuern.

Des Weiteren kann an einer zur Druckkammer weisenden oder einen Teil der Druckkammer bildenden Stirnfläche des Presswerkzeuges zumindest ein zusätzliches Heizelement vorgesehen sein. Beispielsweise können Infrarotstrahlung oder ein Widerstandsheizelement oder dergleichen vorgesehen sein. Dadurch kann das Aufheizen des Fluides in der Druckkammer und/oder des Laminationsblechs zusätzlich unterstützt werden, um den Beginn des Laminationsvorganges zu beschleunigen.

Das Dichtelement weist bevorzugt einen umlaufenden Grundkörper auf, der vorzugsweise bandförmig oder streifenförmig ausgebildet ist, dessen innenliegende Stirnfläche die Druckkammer in einer Ebene, insbesondere einer x/y-Ebene begrenzt. In eine Richtung senkrecht zur x/y-Ebene wird die Druckkammer zum Einen durch das Presswerkzeug und gegenüberliegend durch das Laminierblech begrenzt. Dadurch kann in einfacher Weise eine Druckkammer ausgebildet werden. Zusätzlich ist dadurch ermöglicht, dass das Laminierblech schnell ausgetauscht und an verschiedene Bedingungen zur Herstellung des Laminatverbundes angepasst werden kann und dennoch die Bildung der Druckkammer mittels des Dichtelements und dem Presswerkzeug ermöglicht ist.

Das Dichtelement ist bevorzugt ringförmig, rechteckförmig oder quadratisch ausgebildet. Eine Anpassung an das Format und/oder die Größe der zu laminierenden Schichten wird dadurch ermöglicht.

Das Dichtelement weist bevorzugt einen Querschnitt auf, bei der die zur Druckkammer weisende Stirnfläche sichelförmig oder bogensegmentförmig ausgebildet ist. Im Querschnitt des Grundkörpers des Dichtelements gesehen ist die Stirnfläche konkav zur Druckkammer ausgerichtet. Dadurch werden zum Presswerkzeug und Laminierblech weisende Eckbereiche geschaffen, die als zusätzliche Dichtlippen ausgebildet sein können. Durch den sich in der Druckkammer durch das Fluid aufbauenden Druck wird erzielt, dass diese Eckbereiche jeweils an dem Presswerkzeug oder an dem Laminierblech anliegen und eine zusätzliche Abdichtung ermöglichen.

Des Weiteren ist bevorzugt vorgesehen, dass das Dichtelement als eine metallische Dichtung ausgebildet ist. Dadurch ist eine hohe Lebensdauer ermöglicht.

Das Dichtelement ist bevorzugt an dem Presswerkzeug oder an dem Laminierblech befestigt. Durch die zumindest einseitige feste Zuordnung und Fixierung des Dichtelements an dem Presswerkzeug oder dem Laminierblech ist eine gesicherte Positionierung zur Ausbildung der Druckkammer nach dem Zusammenpressen von Laminierblech und Presswerkzeug gegeben. Bevorzugt ist das Dichtelement an dem Presswerkzeug befestigt, so dass das einem Verschleiß unterliegende Laminierblech in einfacher Weise ausgetauscht werden kann.

An dem oberen und/oder unteren Presswerkzeug mit dem jeweils daran angeordneten Dichtelement ist ein Fluidkreislauf zugeordnet, der zumindest einen Niederdruckspeicher, einen Kompressor, einen Zuführzweig für das heiße Fluid, insbesondere mit einem Heizelement, und einem Zuführzweig für das kühle Fluid, insbesondere mit einem Kühlelement, umfasst. Dieser Fluidkreislauf ist bevorzugt geschlossen ausgebildet. Dadurch kann ein geringerer Energiebedarf erzielt werden. Zudem ist dadurch ermöglicht, dass ein Ablassgeräusch nach dem Entleeren der Druckkammer und Öffnen der Druckkammer verhindert ist. Zudem ist dadurch ermöglicht, dass das aus der Druckkammer abgeführte Fluid dem jeweiligen Zuführzweig wieder zugeführt werden kann, wodurch ein geringerer Energieaufwand zum Heizen oder Kühlen gegeben ist.

Des Weiteren ist bevorzugt vorgesehen, dass der Zuführzweig für das heiße und kühle Fluid jeweils einen Volumenspeicher aufweist. Dies weist den Vorteil auf, dass ein schnelles Befüllen der Druckkammer mit dem heißen oder kühlen Fluid ermöglicht ist, wodurch die Taktzeiten reduziert werden.

Des Weiteren ist bevorzugt vorgesehen, dass das Dichtelement zumindest ein Zulauf für aufgeheiztes Fluid und zumindest ein Zulauf für gekühltes Fluid aufweist und das Presswerkzeug zumindest einen Ablauf für das Fluid aus der Druckkammer umfasst, der mit dem Niederdruckspeicher in Verbindung steht. Durch die Trennung des Zulaufs für heißes und kaltes Fluid wird eine bessere Energiebilanz erzielt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Seitenansicht einer Laminiervorrichtung in einer geöffneten Position,
Figur 2 eine schematische Ansicht auf ein Dichtelement der Laminiervorrichtung gemäß Figur 1,
Figur 3 eine schematische Seitenansicht der Laminiervorrichtung gemäß Figur 1 in einer geschlossenen Anordnung,
Figur 4 eine schematische Seitenansicht einer alternativen Laminiervorrichtung zu Figur 1 in einer geöffneten Position.
Figur 5 eine schematische Schnittansicht von unten auf ein Presswerkzeug und
Figur 6 eine schematische Seitenansicht eines oberen Presswerkzeuges mit Laminationsblech und einem diesen zugeordneten geschlossenen Fluidkreislauf.

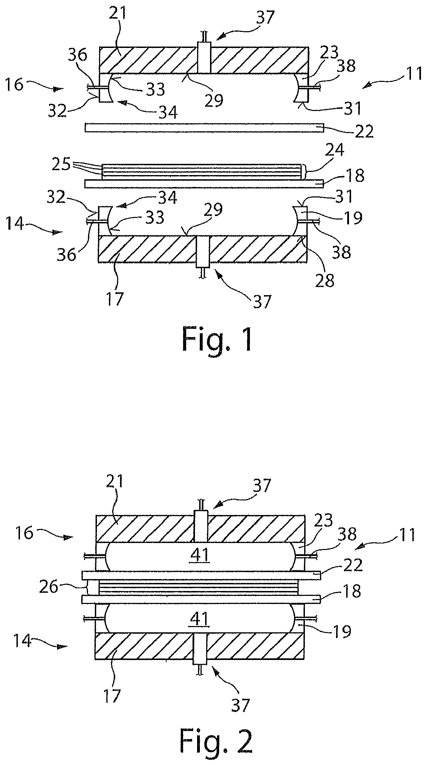

In Figur 1 ist eine schematische Ansicht auf eine erfindungsgemäße Laminiervorrichtung 11 dargestellt. Diese Laminiervorrichtung 11 befindet sich in einem geöffneten Zustand für einen Laminiervorgang.

Die Laminiervorrichtung 11 umfasst ein Unterwerkzeug 14 und ein Oberwerkzeug 16. Das Unterwerkzeug 14 besteht zumindest aus einem unteren Presswerkzeug 17 sowie einem Laminierblech 18 und einem dazwischen angeordneten Dichtungselement 19.

Das Oberwerkzeug 16 besteht aus einem oberen Presswerkzeug 21 sowie einem Laminierblech 22 und einem dazwischen angeordneten Dichtelement 23.

Zwischen dem oberen und unteren Laminierblech 18,22 sind in einem Stapel 24 mehrere übereinanderliegende Schichten 25 auf dem unteren Laminierblech 18 aufliegend vorgesehen, die durch einen nachfolgend noch näher beschriebenen Laminiervorgang zu einem Laminatverbund 26 (Figur 2) verbunden, insbesondere verschweißt, werden.

Das obere und untere Presswerkzeug 17, 21 sind beispielsweise als eine Pressplatte ausgebildet. Das Laminierblech 18, 22 ist beispielsweise als dünne metallische Platte ausgebildet, welche in Abhängigkeit der Laminieraufgabe ein zum Stapel 24 weisende glatte Oberfläche oder aber auch eine strukturierte Oberfläche aufweisen kann.

Das Dichtelement 19, 23 ist in einer Schnittdarstellung in Figur 1 und in einer schematischen Draufsicht in Figur 2 dargestellt. Dieses Dichtelement 19, 23 weist einen geschlossen umlaufenden Grundkörper auf und kann beispielsweise in der Draufsicht gesehen mit einer rechteckförmigen Kontur ausgebildet sein.

Das Dichtelement 19, 23 weist eine obere Auflagefläche 28 zur Anlage an einer Stirnfläche 29 des Presswerkzeuges 17, 21 auf. Gegenüber der oberen Anlagefläche 28 umfasst das Dichtelement 19, 23 eine untere Anlagefläche 31, mit welcher das Dichtelement 19, 23 am Laminierblech 18, 22 aufliegt. Das Dichtelement 19, 23 kann eine äußere Umfangsfläche 32 aufweisen (Figur 1), welche vorzugsweise rechtwinklig zur oberen und unteren Anlagefläche 28, 31 ausgebildet ist. Eine innere Stirnfläche 33 des Dichtungselements 19, 23 ist bevorzugt sichelförmig oder bogensegmentförmig ausgebildet. Dadurch ist die innere Stirnfläche 33 konkav am Dichtelement 19, 23 vorgesehen. Somit entstehen Eckbereiche 34, welche spitz zulaufend ausgebildet sind, die jeweils an dem Presswerkzeug 17, 21 bzw. Laminierblech 18, 22 anliegen.

An dem Dichtelement 19, 23 kann zumindest ein Zulauf 36, 38 und zumindest ein Ablauf vorgesehen sein. Gemäß dem Ausführungsbeispiel sind am Dichtelement 19, 23 zwei Zuläufe 36, 38 sowie zumindest ein am Presswerkzeug 17, 21 angeordneten Ablauf 37 vorgesehen.

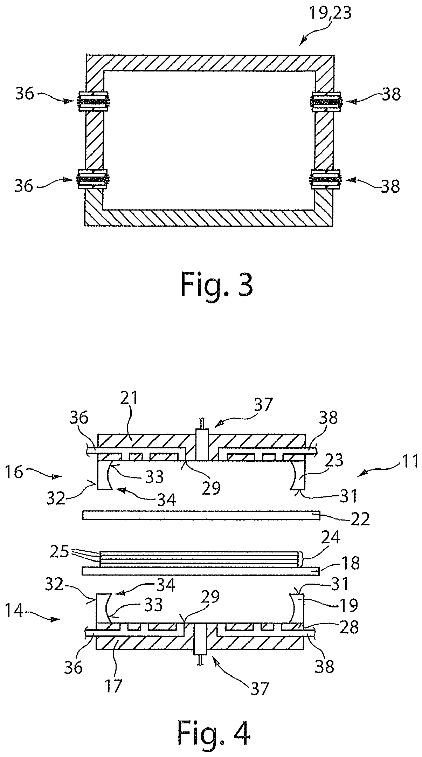

Zur Durchführung eines Laminiervorganges wird das Unterwerkzeug 14 und das Oberwerkzeug 16 geschlossen, so dass über die Presswerkzeuge 17, 21 ein Druck auf die Schichten 25 des Stapels 24 zur Bildung des Laminatverbunds 26 ausgeübt wird (Figur 3). Während eines Schließvorganges des Oberwerkzeuges 16 und Unterwerkzeuges 14 wird durch das Presswerkzeug 17, 21 das jeweilige Dichtelement 19, 23 zur Anlage an das Laminierblech 18, 22 gepresst. Dadurch bildet sich durch das Laminierblech 18, das Presswerkzeug 17 und dem dazwischenliegenden Dichtelement 19 eine Druckkammer 41. Analoges gilt für das Presswerkzeug 21, das Laminierblech 22 und Dichtelement 23.

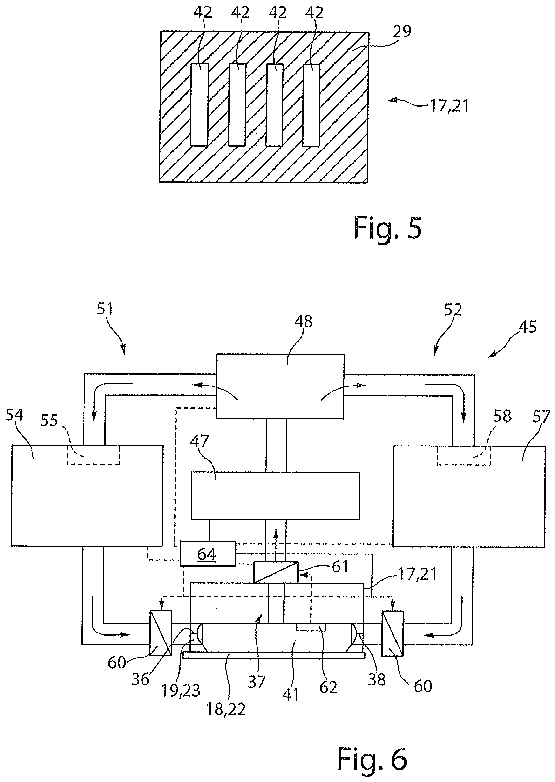

Zur Durchführung des Laminationsvorganges wird diese Druckkammer 41 ein Oberwerkzeug 16 und Unterwerkzeug 14 zunächst mit einem heißen Fluid befüllt, um das Laminierblech 18, 22 aufzuheizen und einen gleichmäßigen Druck auf den Stapel 24 zu bewirken. Die Befüllung der Druckkammer 41 im Oberwerkzeug 16 und Unterwerkzeug 14 erfolgt bevorzugt gleichzeitig. Nachdem Laminieren der Schichten 25 zu einem Laminatverbund 26 wird ein kühles Fluid der Druckkammer 41 zugeführt, um den Laminatverbund 26 zu kühlen. Nachfolgend wird dieser Vorgang anhand von Figur 6 noch näher beschrieben.

Nach dem Abkühlen des Laminatverbundes 26 wird das Oberwerkzeug 16 von dem Unterwerkzeug 14 abgehoben und zumindest das obere Laminierblech 22 ebenfalls von dem Laminatverbund 26 abgehoben, so dass der Laminatverbund 26 entnommen werden kann. Das Oberwerkzeug 16 und Unterwerkzeug 14 kann unter Aufrechterhaltung der Druckkammer 41 voneinander abgehoben werden. Bevorzugt wird jedoch das jeweilige Laminierblech 16, 22 von der Pressplatte 17, 21 abgehoben.

In Figur 4 ist eine schematische Seitenansicht einer alternativen Ausführungsform der Laminiervorrichtung 11 zu Figur 1 und 2 dargestellt. Die Laminiervorrichtung 11 in Figur 4 weicht lediglich dahingehend von der Ausführungsform in Figur 1 ab, dass der Zulauf 36, 38 nicht durch das Dichtelement 19, 23 aufgenommen ist, sondern in dem Presswerkzeug 17, 21 verläuft. Dabei kann der Zulauf 36, 38 in dem Presswerkzeug 17, 21 jeweils eine Düse oder auch mehrere Düsen aufweisen. Bevorzugt ist vorgesehen, dass diese Düsen senkrecht in der aufeinander zuweisenden Stirnflächen 29 der Presswerkzeuge 17, 21 vorgesehen sind. Dadurch kann das Fluid senkrecht zur Erstreckungsebene des Laminierblechs 18, 22 in die Druckkammer 41 münden und auf dem Laminierblech 18, 22 aufprallen, wodurch die Wärmeübertragung erhöht wird.

Durch die Anordnung der Zuläufe 36, 38 im Presswerkzeug 17, 21 kann das Dichtungselement 19, 23 frei von Zuläufen ausgebildet sein. Im Übrigen wird auf die vorstehende Figurenbeschreibung 1 bis 3 Bezug genommen.

In Figur 5 ist eine schematische Schnittansicht von unten auf das Presswerkzeug 17, 21 dargestellt.

Zur verbesserten Aufheizung der Druckkammer 41 kann der Stirnfläche 29 des Presswerkzeuges 17, 21 zumindest ein Heizelement 42 zugeordnet sein. Beispielsweise können Infrarotheizstrahlelemente oder Widerstandsheizelemente oder dergleichen eingesetzt werden.

In Figur 6 ist ein Oberwerkzeug 16 mit einem daran angeschlossenen Fluidkreislauf 45 dargestellt. Analoges gilt für das Unterwerkzeug 14. Dieser Fluidkreislauf 45 umfasst einem dem Presswerkzeug 17, 21 zugeordneten Ablauf 37, der mit einem Niederdruckspeicher 47 zur Aufnahme des aus der Druckkammer 41 abgeführten Fluides verbunden ist. Dem Niederdruckspeicher 47 nachgeschalten ist ein Kompressor 48 vorgesehen. Von diesem aus wird ein Zuführzweig 51 für heißes Fluid und ein Zuführzweig 52 für kühles Fluid mit dem in den Niederdruckspeicher 47 gespeicherten Fluids versorgt. In dem Zuführzweig 51 ist ein Speicher 54 für heißes Fluid vorgesehen. Dieser umfasst bevorzugt ein Heizelement 55. Über eine Zuführleitung wird heißes Fluid von dem Speicher 54 dem zumindest einen Zulauf 36 am Dichtelement 23 in die Druckkammer 41 zugeführt.

Der Zuführzweig 52 für kaltes Fluid umfasst einen Speicher 57 für kaltes Fluid sowie bevorzugt ein dem Speicher 57 zugeordnetes Kühlelement 58. Von diesem Speicher 57 aus führt eine Zuführleitung zum zumindest einen Zulauf 38 am Dichtelement 19, um das kühle Fluid der Druckkammer zuzuführen.

Dem Zulauf 36, 38 vorgeschalten ist jeweils ein Ventil 60, insbesondere Einlassventil. Ebenso wird der Ablauf 37 über ein Ventil 61, insbesondere Auslassventil gesteuert. Ergänzend kann in dem Presswerkzeug 17, 21 ein Temperatur- und/oder Drucksensor 62 vorgesehen sein. Des Weiteren ist eine Steuerungseinrichtung 64 vorgesehen, welche die Ventile 60, 61 steuert sowie Daten des Temperatur- und/oder Drucksensors 62 erfasst und auswertet. Zusätzlich kann die Steuerungseinrichtung 64 mit dem Niederdruckspeicher 47, dem Kompressor 48, dem Heizelement 55, dem Kühlelement 58, dem Speicher 54 bezüglich Druck und/oder Temperatur an dem Speicher 57 bezüglich Druck und/oder Temperatur gekoppelt sein.

Zum Schließen der Laminiervorrichtung 11 wird das Oberwerkzeug 16 und das Unterwerkzeug 14 in eine Schließposition gemäß Figur 3 übergeführt. Durch die aufgebrachte Presskraft der Presswerkzeuge 17, 21 wird das jeweilige Dichtelement 19, 23 zwischen dem Laminierblech 18, 22 und dem Presswerkzeug 17, 21 eingepresst und bildet eine dadurch gebildete Druckkammer 41 ab. Anschließend wird durch die Steuerungseinrichtung 64 ein Öffnen des Ventils 60 am Zulauf 36 für heißes Fluid angesteuert, so dass aus dem Speicher 54 ein heißes Fluid in die Druckkammer 41 geführt wird. Nach Erreichen eines vorbestimmten Druckes in der Druckkammer 41, welches über den Druck- und/oder Temperaturfühler 62 erfasst wird, wird das Ventil 60 geschlossen. Ergänzend kann über die Heizelemente 42 die Temperatur in der Druckkammer 41 noch weitere aufgeheizt werden. Sobald die Lamination, insbesondere das Verschweißen der Schichten 25 erfolgt ist, wird das Ventil 61 geöffnet, so dass das heiße Fluid aus der Druckkammer 41 über den Ablauf 37 abströmen und in den Niederdruckspeicher 47 gelangen kann. Gleichzeitig wird das Ventil 60 am Zulauf 38 für das kühle Fluid geöffnet, so dass aus dem Speicher 57 kühles Fluid nachfließen kann. Sobald durch den Temperatursensor 62 in der Druckkammer kühles Fluid erfasst wird, schließt das Ventil 61. Über den Speicher 47 wird weiterhin kühles Fluid zugeführt, bis der erforderliche Druck mit kühlem Fluid in der Druckkammer 41 aufgebaut ist. Dies wird wiederum durch den Temperatur- und/oder Drucksensor 62 erfasst. Daraufhin wird das Ventil 60 für das kühle Fluid geschlossen. Nach dem Abkühlen des Laminatverbundes 26 kann das Ventil 61 vom Ablauf 37 wieder geöffnet werden. Ebenso kann zumindest ein Ventil 60 für die Nachführung des kühlen oder heißen Fluids erfolgen, um nach dem Abheben des Oberwerkzeuges 16 vom Unterwerkzeug 14 jeweils das Laminierblech 18, 22 vom Presswerkzeug 17, 21 abzuheben. Das gespeicherte Fluid im Niederdruckspeicher 47 kann mittels dem Kompressor 48 komprimiert und wahlweise dem Zuführzweig 51, 52 zugeführt werden. Bevorzugt wird in dem Niederdruckspeicher 47 vorhandenes wärme Fluid dem Zuführzweig 51 und kühles Fluid dem Zuführzweig 52 zugeführt. Durch die Anordnung der Speicher 54, 57 in dem Fluidkreislauf 45 kann ein schnelles Befüllen der Druckkammer 41 erfolgen, insbesondere ein Aufheizen des Stapels 24 und darauffolgend ein schnelles Abkühlen des Laminatverbunds 26 ermöglicht sein.

**Bezugszeichenliste**

| | |
|---|---|
| 11. Laminiervorrichtung | 41. Druckkammer |
| 14. Unterwerkzeug | 42. Heizelement |
| 16. Oberwerkzeug | 45. Fluidkreislauf |
| 17. unteres Presswerkzeug | 47. Niederdruckspeicher |
| 18. Laminierblech | 48. Kompressor |
| 19. Dichtelement | 51. Zuführzweig für heißes Fluid |
| 21. oberes Presswerkzeug | 52. Zuführzweig für kaltes Fluid |
| 22. Laminierblech | 54. Speicher |
| 23. Dichtelement | 55. Heizelement |
| 24. Stapel | 57. Speicher |
| 25. Schichten | 58. Kühlelement |
| 26. Laminierverbund | 60. Ventil |
| 28. obere Auflagefläche | 61. Ventil |
| 29. Stirnfläche von 17 | 62. Temperatur/ Drucksensor |
| 31. untere Anlagefläche | 64. Steuerungseinrichtung |
| 32. Umfangsfläche | |
| 33. innere Stirnfläche | |
| 34. Eckbereich | |
| 36. Zulauf | |
| 37. Ablauf | |
| 38. Zulauf | |

## Patentansprüche

1. Verfahren zum Laminieren von mehreren in einem Stapel (24) angeordneten Schichten (25) zu einem Laminatverbund (26), mit einer Laminiervorrichtung (11), welche ein unteres Presswerkzeug (17) und einem diesen zugeordneten Laminierblech (18) und mit einem oberen Presswerkzeug (21) und diesem zugeordneten Laminierblech (22) aufweist, wobei auf dem unteren Laminierblech (18) die zu einem Stapel (24) angeordneten Schichten (25) aufgelegt werden,
**dadurch gekennzeichnet**
- **dass** das obere und untere Presswerkzeug (17,21) jeweils auf das dem jeweiligen Presswerkzeug (17, 21) zugeordneten Laminierblech (18, 22) zubewegt werden,
- **dass** das Presswerkzeug (17, 21) auf das Laminierblech (18, 22) gepresst wird und mit einem dazwischen angeordneten Dichtelement (19, 23) eine Druckkammer (41) gebildet wird, welche während des Laminationsvorgangs mit einem Fluid befüllt wird.

2. Verfahren nach Anspruch 1, **dadurch gekennzeichnet, dass** die Druckkammer (41) über zumindest einen am Dichtungselement (19, 23) und/oder Presswerkzeug (17, 21) angeordneten zumindest einen Zulauf (36, 38) und/oder zumindest einen Ablauf (37) das Fluid zu- und abgeführt wird.

3. Verfahren nach Anspruch 1, **dadurch gekennzeichnet, dass** die Druckkammer (41) durch einen mit einem Presswerkzeug (17, 21) und dem Dichtelement (19, 23) verbundenen Fluidkreislauf (45) mit Fluid versorgt wird.

4. Verfahren nach einem der Ansprüche 1 bis 3, **dadurch gekennzeichnet, dass** zum Laminieren der Schichten (25) zu einem Stapel (24) die Druckkammer (41) mit einem heißen Fluid befüllt wird und vorzugsweise nach dem Laminieren der Schichten (25) zu einem Laminatverbund (26) die Druckkammer (41) mit kaltem Fluid befüllt wird.

5. Verfahren nach einem der Ansprüche 1 bis 4, **dadurch gekennzeichnet, dass** das heiße Fluid über einen Zuführzweig (51) dem Zulauf (36) an dem Dichtelement (19, 23) und/oder das Presswerkzeug (17, 21) zugeführt wird, der mit dem Niederdruckspeicher (47) in Verbindung steht und mit dem Ablauf (37) am Presswerkzeug (17, 21) verbunden ist und der Zuführzweig (51) einen Speicher (54) für heißes Fluid aufweist, der mit einem aus dem Niederdruckspeicher (47) bereitgestellten und mit einem Kompressor (48) komprimierten Fluid befüllt wird.

6. Verfahren nach einem der Ansprüche 1 bis 5, **dadurch gekennzeichnet, dass** das kühle Fluid über einen Zuführzweig (52) dem Zulauf (38) an dem Dichtelement (19, 23) und/oder das Presswerkzeug (17, 21) zugeführt wird, der mit dem Niederdruckspeicher (47) in Verbindung steht und mit dem Ablauf (37) am Presswerkzeug (17, 21) verbunden ist und der Zuführzweig (52) einen Speicher (57) für kühles Fluid aufweist, der mit einem aus dem Niederdruckspeicher (47) bereitgestellten und mit einem Kompressor (48) komprimierten Fluid befüllt wird.

7. Verfahren nach einem der Ansprüche 1 bis 6, **dadurch gekennzeichnet, dass** als Fluid ein gasförmiges oder ein flüssiges Medium eingesetzt wird.

8. Laminiervorrichtung zur Durchführung des Verfahrens nach einem der Ansprüche 1 bis 7 zum Laminieren von mehreren in einem Stapel (24) angeordneten Schichten (25) zu einem Laminatverbund (26) mit einem oberen und unteren Presswerkzeug (17, 21) sowie jeweils einem dem oberen und unteren Presswerkzeug (17, 21) zugeordneten Laminierblech (18, 22), zwischen dem der Stapel (24) von mehreren Schichten (25) zur Bildung des Laminatverbundes (26) während eines Laminationsvorganges angeordnet ist, **dadurch gekennzeichnet, dass** zwischen dem Laminierblech (18, 22) und dem Presswerkzeug (17, 21) ein Dichtelement (23) vorgesehen ist, welches nach dem Zusammenführen des Laminierblechs (18, 22) und dem Presswerkzeug (17, 21) eine mit einem Fluid befüllbare Druckkammer (41) bildet.

9. Laminiervorrichtung nach Anspruch 8, **dadurch gekennzeichnet, dass** das Presswerkzeug (17, 21) und/oder das Dichtelement (19, 23) zumindest einen Zulauf (36) in die Druckkammer (41) und/oder zumindest einen Ablauf (37) für das Fluid aus der Druckkammer (41) aufweist und vorzugsweise der zumindest eine Zulauf (36, 38) und/oder zumindest eine Ablauf (37) jeweils entfernt zueinander an dem Dichtelement (19, 23) und/oder Presswerkzeug (17, 21) vorgesehen sind.

10. Laminiervorrichtung nach Anspruch 8 oder 9, **dadurch gekennzeichnet, dass** das Presswerkzeug (17, 21) mehrere zur Erstreckungsebene des Laminierblechs (18) senkrechten ausgerichteten Zuläufe (36, 38), insbesondere Düsen, aufweist.

11. Laminiervorrichtung nach Anspruch 8, **dadurch gekennzeichnet, dass** das Presswerkzeug (17, 21) an einer zum Laminierblech (18, 22) oder zur Druckkammer (41) weisenden oder ein Teil der Druckkammer (41) bildenden Stirnfläche (29) zumindest einen Temperatur- und/oder einen Drucksensor (62) aufweist und/oder dass das Presswerkzeug (17, 21) an einer zur Druckkammer (41) weisenden oder einen Teil der Druckkammer (41) bildenden Stirnfläche (29) zumindest ein Heizelement (42) aufweist.

12. Laminiervorrichtung nach einem der Ansprüche 8 bis 11, **dadurch gekennzeichnet, dass** das Dichtelement (19, 23), welches vorzugsweise als eine Metalldichtung ausgebildet ist, einen umlaufenden Grundkörper aufweist, dessen innenliegende Stirnfläche (33) die Druckkammer (41) in einer Ebene begrenzt und vorzugsweise ringförmig, rechteckförmig oder quadratisch ausgebildet ist.

13. Laminiervorrichtung nach einem der Ansprüche 8 bis 12, **dadurch gekennzeichnet, dass** das Dichtelement (19, 23) einen Querschnitt aufweist, welcher eine zur Druckkammer (41) weisende Stirnfläche (33) aufweist, die sichel- oder bogensegmentförmig ausgebildet ist.

14. Laminiervorrichtung nach einem der Ansprüche 8 bis 13, **dadurch gekennzeichnet, dass** dem oberen und/oder dem unteren Presswerkzeug (17, 21) und dem jeweils daran angeordneten Dichtelement (19, 23) ein Fluidkreislauf (45) zugeordnet ist.

15. Laminiervorrichtung nach Anspruch 14, **dadurch gekennzeichnet, dass** der Fluidkreislauf (45) zumindest einen Niederdruckspeicher (47), einen Kompressor (48) und zumindest einen Zuführzweig (51) für heißes Fluid und ein Zuführzweig (52) für kühles Fluid umfasst und vorzugsweise der Zuführzweig (51, 52) für heißes und kaltes Fluid jeweils einen Speicher (54, 57) für das heiße und kühle Fluid aufweist.

16. Laminiervorrichtung nach einem der Ansprüche 8 bis 15, **dadurch gekennzeichnet, dass** das Dichtelement (19, 23) und/oder das Presswerkzeug (17, 21) zumindest einen Zulauf (36, 38) für aufgeheiztes Fluid und zumindest einen Zulauf (36, 38) für ein kühles Fluid aufweist und das Presswerkzeug (17, 21) zumindest einen Ablauf (37) zum Abführen des in der Druckkammer (41) gespeicherte Fluid umfasst, wobei der zumindest eine Ablauf (37) mit dem Niederdruckspeicher (47) in Verbindung steht.

## Claims

1. A method for laminating a plurality of layers (25) arranged in a stack (24) so as to obtain a laminated composite (26), said method involving a laminating device (11) having a lower compression tool (17) and a lamination plate (18) associated therewith as well as an upper compression tool (21) and a lamination plate (22) associated therewith, with the layers (25) being arranged into a stack (24) disposed on said lower lamination plate (18),
**characterised in that**
- the upper and the lower compression tools (17, 21) are each moved toward the respective lamination plate (18, 22) associated with the respective compression tool (17, 21),
- the compression tool (17, 21) is pressed onto the lamination plate (18, 22) and, with the aid of a sealing element (19, 23) arranged therebetween, a compression chamber (41) is formed and filled with a fluid during the lamination process.

2. The method as claimed in claim 1, **characterised in that** the compression chamber (41) has at least one feed pipe (36, 38) and/or at least one discharge pipe (37) arranged on the sealing element (19, 23) and/or on the compression tool (17, 21) for the fluid to be fed and discharged.

3. The method as claimed in claim 1, **characterised in that** the compression chamber (41) is supplied with fluid by means of a fluid circulation system (45) that is connected to a compression tool (17, 21) and to the sealing element (19, 23).

4. The method as claimed in any one of claims 1 to 3, **characterised in that** in order for the stack (24) of layers (25) to be laminated, the compression chamber (41) is filled with a hot fluid, and **in that** preferably subsequent to the lamination process, in the course of which said layers (25) are transformed into a laminated composite (26), the compression chamber (41) is filled with cold fluid.

5. The method as claimed in any one of claims 1 to 4, **characterised in that** the hot fluid is fed to the feed pipe (36) at the sealing element (19, 23) and/or at the compression tool (17, 21) via a feed branch (51) communicating with the low-pressure reservoir (47) and communicating with the discharge pipe (37) at the compression tool (17, 21), and **in that** the feed branch (51) has a reservoir (54) for hot fluid which is filled with fluid supplied from the low-pressure reservoir (47) and is compressed by a compressor (48).

6. The method as claimed in any one of claims 1 to 5, **characterised in that** the cold fluid is fed to the feed pipe (38) at the sealing element (19, 23) and/or at the compression tool (17, 21) via a feed branch (52) communicating with the low-pressure reservoir (47) and communicating with the discharge pipe (37) at the compression tool (17, 21), and **in that** the feed branch (52) has a reservoir (57) for cold fluid which is filled with fluid supplied from the low-pressure reservoir (47) and is compressed by a compressor (48).

7. The method as claimed in any one of claims 1 to 6, **characterised in that** the fluid employed is a gaseous or a liquid medium.

8. A laminating device for performing the method as claimed in any one of claims 1 to 7, for laminating a plurality of layers (25) arranged in a stack (24) so as to obtain a laminated composite (26), said device having an upper and a lower compression tool (17, 21) and a lamination plate (18, 22) associated with said upper and a lower compression tool (17, 21) between which the stack (24) comprising a plurality of layers (25) to be formed into the laminated composite (26) is arranged during a lamination process, **characterised in that** between the lamination plate (18, 22) and the compression tool (17, 21), a sealing element (23) is provided which, once the lamination plate (18, 22) and the compression tool (17, 21) have been moved against each other, forms a compression chamber (41) that can be filled with a fluid.

9. The laminating device as claimed in claim 8, **characterised in that** the compression tool (17, 21) and/or the sealing element (19, 23) have at least one feed pipe (36) leading to the compression chamber (41) and/or at least one discharge pipe (37) for the fluid to be discharged from the compression chamber (41), and **in that** preferably the at least one feed pipe (36, 38) and/or the at least one discharge pipe (37) are provided in a spaced-apart manner on the sealing element (19, 23) and/or on the compression tool (17, 21).

10. The laminating device as claimed in claim 8 or 9, **characterised in that** the compression tool (17, 21) has a plurality of feed pipes (36, 38) arranged perpendicularly to the extension plane of the lamination plate (18).

11. The laminating device as claimed in claim 8, **characterised in that** the compression tool (17, 21) has at least one temperature and/or pressure sensor (62) formed on an end face (29) facing toward the lamination plate (18, 22) or toward the compression chamber (41) or being a part of said compression chamber (41), and/or **in that** the compression tool (17, 21) has at least one heating element (42) formed on an end face (29) facing toward the compression chamber (41) or being a part of said compression chamber (41).

12. The laminating device as claimed in any one of claims 8 to 11, **characterised in that** the sealing element (19, 23), which is preferably realised in the form of a metallic sealing, has a circumferential main body the inwardly-facing end faces (33) of which delimit the compression chamber (41) in one plane and are preferably shaped in an annular, a rectangular, or a square form.

13. The laminating device as claimed in any one of claims 8 to 12, **characterised in that** the sealing element (19, 23) has a cross-section including an end face (33) facing toward the compression chamber (41) which is shaped in the form of a crescent or an arcuate segment.

14. The laminating device as claimed in any one of claims 8 to 13, **characterised in that** a fluid circulation system (45) is associated with the upper and/or the lower compression tool (17, 21) and with the sealing element (19, 23) arranged respectively thereon.

15. The laminating device as claimed in claim 14, **characterised in that** the fluid circulation system (45) comprises at least one low-pressure reservoir (47), a compressor (48), and at least one feed branch (51) for hot fluid and one feed branch (52) for cold fluid, and **in that** preferably the feed branches (51, 52) for hot and cold fluid have each at least one reservoir (54, 57), respectively, for the hot and cold fluids.

16. The laminating device as claimed in any one of claims 8 to 15, **characterised in that** the sealing element (19, 23) and/or the compression tool (17, 21) have at least one feed pipe (36, 38) for heated fluid and at least one feed pipe (36, 38) for a cold fluid, and **in that** the compression tool (17, 21) comprises at least one discharge pipe (37) for discharging the fluid stored in the compression chamber (41), said at least one discharge pipe (37) communicating with the low-pressure reservoir (47).

## Revendications

1. Procédé destiné à stratifier plusieurs couches (25) disposées en une pile (24) en vue de former un composite stratifié (26), avec un dispositif de stratification (11) qui présente un outil de compression inférieur (17) et une tôle de stratification (18) affectée à ce dernier, et avec un outil de compression supérieur (21) et une tôle de stratification (22) affectée à ce dernier, les couches (25) disposées en une pile (24) étant posées sur la tôle de stratification inférieure (18), **caractérisé en ce que**
- les outils de compression supérieur et inférieur (17, 21) sont respectivement déplacés vers la tôle de stratification (18, 22) affectée à l'outil de compression respectif (17, 21),
- l'outil de compression (17, 21) est pressé sur la tôle de stratification (18, 22) et, grâce à un élément d'étanchéité (19, 23) disposé entre ceux-ci, une chambre de pression (41) est formée, laquelle est remplie avec un fluide pendant l'opération de stratification.

2. Procédé selon la revendication 1, **caractérisé en ce que** le fluide est amené à la chambre de pression (41) et est évacué de celle-ci via au moins un tuyau d'amenée (36, 38) et/ou au moins un tuyau d'évacuation (37), lesquels sont disposés au niveau de l'élément d'étanchéité (19, 23) et/ou de l'outil de compression (17, 21).

3. Procédé selon la revendication 1, **caractérisé en ce que** la chambre de pression (41) est alimentée en fluide par un circuit de fluide (45) relié à un outil de compression (17, 21) et à l'élément d'étanchéité (19, 23).

4. Procédé selon l'une quelconque des revendications 1 à 3, **caractérisé en ce que** la chambre de pression (41) est remplie avec un fluide chaud pour l'opération de stratification des couches (25) disposées en une pile (24) et que ladite chambre de pression (41) est remplie de fluide froid de préférence après l'opération de stratification des couches (25) qui donne naissance à un composite stratifié (26).

5. Procédé selon l'une quelconque des revendications 1 à 4, **caractérisé en ce que** le fluide chaud est amené, via une branche d'alimentation (51), au tuyau d'amenée (36) situé au niveau de l'élément d'étanchéité (19, 23) et/ou à l'outil de compression (17, 21), laquelle branche d'alimentation est reliée au réservoir basse pression (47) et est reliée au tuyau d'évacuation (37) situé au niveau de l'outil de compression (17, 21), et **en ce que** la branche d'alimentation (51) présente un réservoir (54) pour fluide chaud qui est rempli d'un fluide provenant du réservoir basse pression (47) et comprimé grâce un compresseur (48).

6. Procédé selon l'une quelconque des revendications 1 à 5, **caractérisé en ce que** le fluide froid est amené, via une branche d'alimentation (52), au tuyau d'amenée (38) situé au niveau de l'élément d'étanchéité (19, 23) et/ou à l'outil de compression (17, 21), laquelle branche d'alimentation est reliée au réservoir basse pression (47) et est reliée au tuyau d'évacuation (37) situé au niveau de l'outil de compression (17, 21), et **en ce que** la branche d'alimentation (52) présente un réservoir (57) pour fluide froid qui est rempli d'un fluide provenant du réservoir basse pression (47) et comprimé grâce un compresseur (48).

7. Procédé selon l'une quelconque des revendications 1 à 6, **caractérisé en ce que** le fluide utilisé est un fluide gazeux ou liquide.

8. Dispositif de stratification destiné à réaliser le procédé selon l'une quelconque des revendications 1 à 7 permettant de stratifier plusieurs couches (25) disposées en une pile (24) pour former un composite stratifié (26), pourvu d'outils de compression supérieur et inférieur (17, 21) ainsi que de tôles de stratification (18, 22) affectées respectivement auxdits outils de compression supérieur et inférieur (17, 21) et entre lesquelles est disposée la pile (24) constituée de plusieurs couches (25) en vue de former le composite stratifié (26) pendant une opération de stratification, **caractérisé en ce qu'**entre la tôle de stratification (18, 22) et l'outil de compression (17, 21) est prévu un élément d'étanchéité (23) qui, une fois la tôle de stratification (18, 22) et l'outil de compression (17, 21) réunis, forme une chambre de pression (41) qui peut être remplie avec un fluide.

9. Dispositif de stratification selon la revendication 8, **caractérisé en ce que** l'outil de compression (17, 21) et/ou l'élément d'étanchéité (19, 23) présente(nt) au moins un tuyau d'amenée (36) menant à la chambre de pression (41) et/ou au moins un tuyau d'évacuation (37) pour le fluide en provenance de ladite chambre de pression (41) et que de préférence ledit au moins un tuyau d'amenée (36, 38) et/ou ledit au moins un tuyau d'évacuation (37) sont respectivement prévus espacés l'un de l'autre au niveau de l'élément d'étanchéité (19, 23) et/ou de l'outil de compression (17, 21).

10. Dispositif de stratification selon la revendication 8 ou 9, **caractérisé en ce que** l'outil de compression (17, 21) présente plusieurs tuyaux d'amenée (36, 38), en particulier des buses, orientés perpendiculairement au plan d'extension de la tôle de stratification (18).

11. Dispositif de stratification selon la revendication 8, **caractérisé en ce que** l'outil de compression (17, 21) présente au moins un capteur de température et/ou de pression (62) sur une face frontale (29) tournée vers la tôle de stratification (18, 22) ou vers la chambre de pression (41) ou formant une partie de ladite chambre de pression (41), et/ou **en ce que** l'outil de compression (17, 21) présente au moins un élément chauffant (42) sur une face frontale (29) tournée vers la chambre de pression (41) ou formant une partie de ladite chambre de pression (41).

12. Dispositif de stratification selon l'une quelconque des revendications 8 à 11, **caractérisé en ce que** l'élément d'étanchéité (19, 23), qui est réalisé de préférence sous la forme d'un joint en métal, présente un corps de base circonférentiel dont la face frontale (33) tournée vers l'intérieur délimite la chambre de pression (41) dans un plan donné et est réalisée de préférence en forme d'anneau, de rectangle ou de carré.

13. Dispositif de stratification selon l'une quelconque des revendications 8 à 12, **caractérisé en ce que** l'élément d'étanchéité (19, 23) présente une section transversale pourvue d'une face frontale (33) qui est tournée vers la chambre de pression (41) et est réalisée en forme de faucille ou de segment d'arc.

14. Dispositif de stratification selon l'une quelconque des revendications 8 à 13, **caractérisé en ce qu'**un circuit de fluide (45) est affecté à l'outil de compression supérieur et/ou inférieur (17, 21) et à l'élément d'étanchéité (19, 23) respectif disposé de manière contiguë à ceux-ci.

15. Dispositif de stratification selon la revendication 14, **caractérisé en ce que** le circuit de fluide (45) comprend au moins un réservoir basse pression (47), un compresseur (48) et au moins une branche d'alimentation (51) pour fluide chaud ainsi qu'une branche d'alimentation (52) pour fluide froid et **en ce que** de préférence les branches d'alimentation (51, 52) pour fluide chaud et pour fluide froid présentent respectivement un réservoir (54, 57) pour le fluide chaud et le fluide froid.

16. Dispositif de stratification selon l'une quelconque des revendications 8 à 15, **caractérisé en ce que** l'élément d'étanchéité (19, 23) et/ou l'outil de compression (17, 21) présente(nt) au moins un tuyau d'amenée (36, 38) pour du fluide chauffé et au moins un tuyau d'amenée (36, 38) pour un fluide froid, et **en ce que** l'outil de compression (17, 21) comprend au moins un tuyau d'évacuation (37) pour évacuer le fluide stocké dans la chambre de pression (41), ledit au moins un tuyau d'évacuation (37) étant relié au réservoir basse pression (47).
